# EUROPÄISCHE PATENTSCHRIFT

(11) **EP 3 008 669 B1**
(45) Veröffentlichungstag und Bekanntmachung des Hinweises auf die Patenterteilung: **13.02.2019**
(21) Anmeldenummer: 14733571.5
(22) Anmeldetag: 13.06.2014
(51) Int. Cl.: G06K 19/077, B29C 45/26

(54) **CHIPKARTE UND VERFAHREN ZUM HERSTELLEN EINER CHIPKARTE**
CHIP CARD AND METHOD FOR PRODUCING A CHIP CARD
CARTE À PUCE ET PROCÉDÉ DE FABRICATION D'UNE CARTE À PUCE

(30) Priorität: 13.06.2013 DE 102013106181
(43) Veröffentlichungstag der Anmeldung: 20.04.2016
(73) Patentinhaber: Bundesdruckerei GmbH, 10969 Berlin (DE)
(72) Erfinder: KNEBEL, Michael, 10405 Berlin (DE); KRUEGER, Per, 14197 Berlin (DE); SPOETTL, Thomas, 93098 Mintraching (DE); STAMPKA, Peter, 93133 Burglengenfeld (DE)
(74) Vertreter: Patentanwälte Bressel und Partner mbB
(86) Internationale Anmeldenummer: PCT/EP2014/062352
(87) Internationale Veröffentlichungsnummer: WO 2014/198882

(56) Entgegenhaltungen:
- DE-A1- 10 248 383
- DE-A1- 10 248 392
- DE-A1- 19 535 989

## Beschreibung

Die Erfindung betrifft eine Chipkarte und ein Verfahren zum Herstellen einer Chipkarte.

Im Allgemeinen werden für die Herstellung von Chipkarten, oder sogenannter Smartcards oder Integrated-Circuit-Cards (ICC) Klebstoffe verwendet, beispielsweise um das Chipmodul, den Chip oder den integrierten Schaltkreis mit der entsprechenden Kunststoffkarte oder dem Chipkartengehäuse zu verbinden. Klebeverbindungen der Chipkarte können im Gebrauch stark belastet sein und somit die Gebrauchsfähigkeit der Chipkarte begrenzen, wobei vor allem die Langzeitstabilität der Klebstoffe eine Rolle spielen kann.

DE10248392 A1 zeigt den Oberbegriff der Ansprüche 1 und 9.

Die Erfindung ist Gegenstand der unabhängigen Ansprüche.

Gemäß verschiedenen Ausführungsformen werden eine Chipkarte und ein Verfahren zum Herstellen einer Chipkarte bereitgestellt, so dass die Gebrauchsfähigkeit der Chipkarte verlängert sein kann und so dass der Herstellungsprozess eine hohe Prozesssicherheit aufweisen kann. Des Weiteren kann die Manipulationssicherheit der der Chipkarte verbessert sein.

Gemäß verschiedenen Ausführungsformen kann eine Chipkarte Folgendes aufweisen: ein elektronisches Chipmodul; ein Chipkartengehäuse; und eine Klebeschicht zum Verkleben des Chipmoduls mit dem Chipkartengehäuse, wobei die Klebeschicht einen Reaktivklebstoff auf Isocyanat-Basis aufweisen kann.

Gemäß verschiedenen Ausführungsformen kann das Chipmodul mindestens einen Chip aufweisen.

Gemäß verschiedenen Ausführungsformen kann das Chipmodul mindestens eine Antenne zum drahtlosen Übertragen von Daten aufweisen.

Gemäß verschiedenen Ausführungsformen kann das Chipmodul mindestens eine Kontaktstruktur zum kontaktbasierten Übertragen von Daten aufweisen, beispielsweise eine Kontaktstruktur gemäß DIN ISO 7816.

Gemäß verschiedenen Ausführungsformen kann der Reaktivklebstoff ein gekapselter latenter Reaktivklebstoff sein. Mit anderen Worten kann der Reaktivklebstoff auf Isocyanat-Basis eine Reaktivkomponente auf Isocyanat-Basis aufweisen, wobei die Reaktivkomponente in Partikelform bereitgestellt sein kann, wobei die Oberfläche der Reaktivkomponentenpartikel desaktiviert sein kann. Dabei können die Partikel in einer zweiten Komponente (beispielsweise eine Polymerkomponente) des Reaktivklebstoffes eingebettet sein oder dispergiert sein.

Gemäß verschiedenen Ausführungsformen kann der Reaktivklebstoff auf Isocyanat-Basis ferner eine Heißklebekomponente aufweisen. Beispielsweise können Partikel einer Reaktivkomponente auf Isocyanat-Basis in einer Heißklebekomponente eingebettet sein oder dispergiert sein.

Ferner kann der Reaktivklebstoff derart eingerichtet sein, dass seine chemische Aktivierungstemperatur oberhalb der Schmelztemperatur der Heißklebekomponente liegt. Weiterhin kann der Reaktivklebstoff derart eingerichtet sein, dass seine chemische Aktivierungstemperatur oberhalb der Schmelztemperatur eines Polymers liegt, wobei die Reaktivkomponente auf Isocyanat-Basis in das Polymer eingebettet oder dispergiert sein kann.

Ferner kann die Klebeschicht, gemäß verschiedenen Ausführungsformen, den Chip teilweise oder vollständig umgeben. Beispielsweise kann der Reaktivklebstoff auf Isocyanat-Basis dazu geeignet sein, den Chip teilweise oder vollständig in den Reaktivklebstoff auf Isocyanat-Basis einzubetten.

Ferner kann die Klebeschicht, gemäß verschiedenen Ausführungsformen, das Chipmodul teilweise oder vollständig umgeben. Beispielsweise kann der Reaktivklebstoff dazu geeignet sein, das Chipmodul teilweise oder vollständig in den Reaktivklebstoff auf Isocyanat-Basis einzubetten.

Gemäß verschiedenen Ausführungsformen können der Chip und/oder das Chipmodul teilweise oder vollständig in den Reaktivklebstoff auf Isocyanat-Basis eingebettet werden.

Gemäß verschiedenen Ausführungsformen kann ein Verfahren zum Herstellen einer Chipkarte Folgendes aufweisen: das Einlegen eines Chipmoduls in ein Chipkartengehäuse; und das Verkleben des Chipmoduls mit dem Chipkartengehäuse unter Verwendung eines Reaktivklebstoffs auf Isocyanat-Basis.

Ferner kann ein Reaktivklebstoff auf Isocyanat-Basis, gemäß verschiedenen Ausführungsformen, zum Verkleben des Chipmoduls mit dem Chipkartengehäuse erwärmt werden.

Gemäß verschiedenen Ausführungsformen kann ein Reaktivklebstoff auf Isocyanat-Basis zum Verkleben eines Chipmoduls mit einem Chipkartengehäuse verwendet werden.

Gemäß verschiedenen Ausführungsformen kann ein latenter gekapselter Reaktivklebstoff auf Isocyanat-Basis zum Verkleben eines Chipmoduls mit einem Chipkartengehäuse verwendet werden.

Gemäß verschiedenen Ausführungsformen kann eine Chipkarte Folgendes aufweisen: ein elektronisches Chipmodul; ein Chipkartengehäuse; und eine Klebeschicht zum Verkleben des Chipmoduls mit dem Chipkartengehäuse, wobei die Klebeschicht einen Klebstoff auf Cyanacrylat-Basis aufweist.

Gemäß verschiedenen Ausführungsformen kann ein Klebstoff und/oder Reaktivklebstoff auf Cyanacrylat-Basis zum Verkleben eines Chipmoduls mit einem Chipkartengehäuse verwendet werden.

Ausführungsbeispiele der Erfindung sind in den Figuren dargestellt und werden im Folgenden näher erläutert.

Es zeigen
- Figur 1A und 1B: jeweils eine schematische Querschnittsansicht oder Seitenansicht einer Chipkarte, gemäß verschiedenen Ausführungsformen;
- Figur 2: schematisch in einer Querschnittsansicht oder Seitenansicht eine Klebeschicht vor dem Aktivieren im Detail, gemäß verschiedenen Ausführungsformen;
- Figuren 3A bis 3C: jeweils eine schematische Querschnittsansicht einer Chipkarte, gemäß verschiedenen Ausführungsformen;
- Figur 4: eine schematische Querschnittsansicht einer Chipkarte, gemäß verschiedenen Ausführungsformen;
- Figuren 5A und 5B: jeweils eine schematische Querschnittsansicht eines Chipmoduls, gemäß verschiedenen Ausführungsformen;
- Figuren 6A und 6B: jeweils eine schematische Querschnittsansicht eines Chipmoduls in einem Chipkartengehäuse, gemäß verschiedenen Ausführungsformen; und
- Figur 7: eine schematische Darstellung eines Ablaufdiagramms eines Verfahrens zum Herstellen einer Chipkarte, gemäß verschiedenen Ausführungsformen.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

Gemäß verschiedenen Ausführungsformen kann ein Reaktivklebstoff auf Isocyanat-Basis dazu verwendet werden, ein Chipmodul mit einem Chipkartengehäuse zu verbinden. Ferner kann ein Reaktivklebstoff auf Isocyanat-Basis eine oder mehrere Isocyanatgruppen aufweisen.

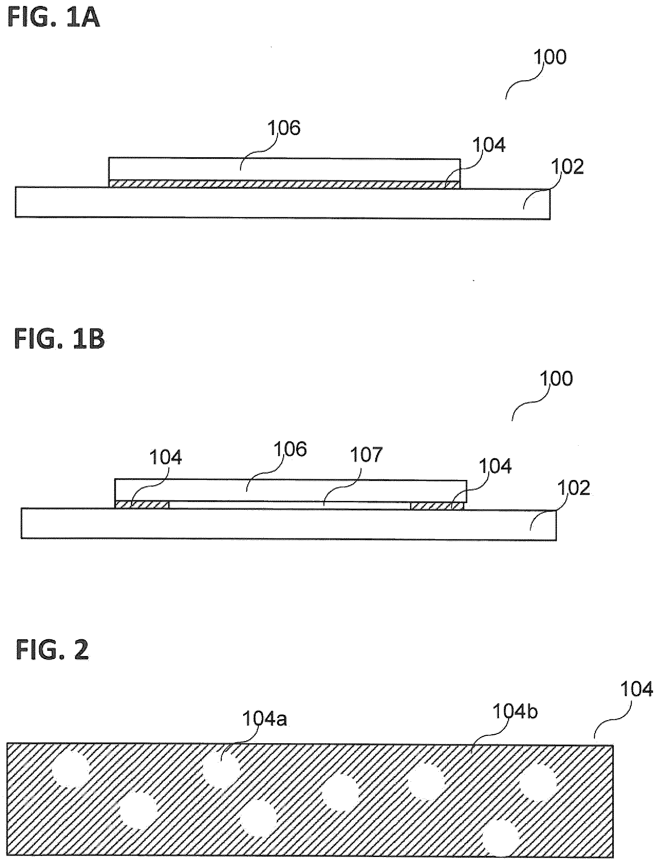

Wie in **Fig.1A** schematisch in einer Querschnittsansicht dargestellt ist, die Darstellung ist in diesem Fall stark vereinfacht gewählt, kann eine Chipkarte 100 zumindest ein Chipkartengehäuse 102, eine Klebeschicht 104 und ein Chipmodul 106 aufweisen. Dabei kann sich die Klebeschicht 104 zwischen dem Chipkartengehäuse 102 und dem Chipmodul 106 befinden.

Wie in **Fig.1B** analog zu Fig.1A dargestellt ist, kann sich die Klebeschicht 104 teilweise in einem Bereich zwischen dem Chipkartengehäuse 102 und dem Chipmodul 106 erstrecken. Somit kann sich, gemäß verschiedenen Ausführungsformen, zwischen dem Chipkartengehäuse 102 und dem Chipmodul 106 mindestens ein Spalt 107 befinden.

Gemäß verschiedenen Ausführungsformen kann die Chipkarte 100 eine genormte Chipkarte gemäß ISO 7810 sein, und damit eine entsprechende äußere Form aufweisen. Insbesondere handelt es sich um ein ID 1 Dokument gemäß ISO 7810 mit den Außenmaßen 85,6 mm x 53,98 mm. Ferner kann es sich um die Datenseite eines Passes handeln (ID 3 gemäß ISO 7810, ICAO 9303). Dementsprechend kann das Chipkartengehäuse 102, gemäß verschiedenen Ausführungsformen, eine entsprechende äußere Form aufweisen.

Ferner können beispielsweise die Abmaße und die Form des Chipkartengehäuses 102 beliebig gewählt oder beliebig angepasst sein.

Gemäß verschiedenen Ausführungsformen kann das Chipmodul 106 mindestens einen integrierten Schaltkreis (oder Chip) und/oder einen elektronischen Schaltkreis aufweisen. Ferner kann das Chipmodul 106 einen Logikchip, einen Speicherchip und/oder einen Mikroprozessorchip aufweisen. Ferner kann das Chipmodul 106 eine Schnittstelle zum Eingeben und/oder Ausgeben von Daten enthalten, so dass der Chip mit entsprechenden Daten beschrieben werden kann und dass Daten von dem Chip ausgegeben werden können. Gemäß verschiedenen Ausführungsformen kann die Schnittstelle zum Eingeben und/oder Ausgeben von Daten ein Kontaktpad zum kontaktbasierten Übertragen von Daten (oder Informationen) oder eine Antenne, zum kontaktlosen Übertragen von Daten (oder Informationen), aufweisen. Gemäß verschiedenen Ausführungsformen kann das Chipmodul 106 eine Antenne und ein Kontaktpad aufweisen (eine sogenannte Dual-Interface-Chipkarte), oder mehrere Antennen aufweisen.

Gemäß verschiedenen Ausführungsformen kann das Chipmodul 106 mittels der Klebeschicht 104 auf und/oder in dem Chipkartengehäuse 102 befestigt oder angeklebt sein. Gemäß verschiedenen Ausführungsformen kann das Chipmodul 106 mittels der Vorderseite oder der Rückseite an dem Chipkartengehäuse 102 befestigt sein. Ferner können die Eigenschaften der Klebeschicht 104 an die Eigenschaften angepasst werden oder angepasst sein, welche für eine langzeitstabile und manipulationssichere Chipkarte 100 benötig werden, wie beispielsweise eine hohe Haftfestigkeit, eine entsprechende Flexibilität der Klebeschicht 104, und/oder eine geeignete reproduzierbare Prozessierfähigkeit.

Gemäß verschiedenen Ausführungsformen kann die Klebeschicht 104 einen Reaktivklebstoff auf Isocyanat-Basis aufweisen oder daraus bestehen. Ferner kann der Reaktivklebstoff auf Isocyanat-Basis mehrere Komponenten aufweisen, beispielsweise eine Reaktivkomponente und eine Polymerkomponente. Gemäß verschiedenen Ausführungsformen kann die Reaktivkomponente Isocyanat oder Poly-Isocyanat aufweisen und die Polymerkomponente kann einen Schmelzklebstoff (einen sogenannten Hotmelt oder Heißkleber) aufweisen.

Gemäß verschiedenen Ausführungsformen kann die chemische Aktivierungstemperatur der Reaktivkomponente höher sein als die Schmelztemperatur der Polymerkomponente (oder der Heißklebekomponente). Dadurch kann beispielsweise eine Verbesserung der Prozesssicherheit erreicht werden, beispielsweise kann ein derartiger Reaktivklebstoff auf Isocyanat-Basis einen reproduzierbareren Klebeprozess ermöglichen.

Gemäß verschiedenen Ausführungsformen kann die Polymerkomponente eine Heißklebekomponente sein oder aufweisen. Ferner kann die Heißklebekomponente auch als Schmelzklebekomponente bezeichnet werden.

Wie in **Fig.2** schematisch vereinfacht dargestellt ist, kann der Reaktivklebstoff eine Reaktivkomponente 104a und eine Polymerkomponente 104b aufweisen, wobei die Reaktivkomponente 104a in Kapseln oder in gekapselter Form in die Polymerkomponente (oder Schmelzklebstoffkomponente) eingebracht oder dispergiert sein kann. Gemäß verschiedenen Ausführungsformen kann der Reaktivklebstoff Isocyanate, Polyisocyanate, und/oder Cyanatverbindungen aufweisen. Gemäß verschiedenen Ausführungsformen kann der Reaktivklebstoff beispielsweise ein latenter Reaktivklebstoff sein (auf Isocyanat-Basis). Gemäß verschiedenen Ausführungsformen kann der Reaktivklebstoff desaktivierte Isocyanate, Polyisocyanate, und/oder Cyanatverbindungen aufweisen. Gemäß verschiedenen Ausführungsformen kann der Reaktivklebstoff die Reaktivkomponente 104a in Kapseln oder in gekapselter Form aufweisen können, wobei die Kapseln eine desaktivierte Oberfläche aufweisen, so dass zumindest die Oberfläche der Kapseln oder der Partikel desaktiviertes Isocyanat und/oder desaktiviertes Polyisocyanat aufweist.

Gemäß verschiedenen Ausführungsformen zeigt Fig.2 schematisch eine Klebeschicht 104, aufweisend einen latenten gekapselten Reaktivklebstoff auf Isocyanat-Basis, vor der chemischen Aktivierung des Reaktivklebstoffs, also beispielsweise vor dem Vernetzen mittels der Reaktivkomponente 104a.

Gemäß verschiedenen Ausführungsformen kann der Reaktivklebstoff auf Isocyanat-Basis zumindest Folgendes aufweisen oder daraus bestehen: Isocyanat, Diisocyanat (mit zwei Isocyanatgruppen) und/oder Polyisocyanat (mit einer Vielzahl von Isocyanatgruppen). Ferner kann der Reaktivklebstoff auf Isocyanat-Basis ein aliphatisches Isocyanat und/oder aromatisches Isocyanat aufweisen oder daraus bestehen.

Gemäß verschiedenen Ausführungsformen kann die Reaktivkomponente 104a, wie in Fig.2 gargestellt ist, Isocyanat, oder Diisocyanat (mit zwei Isocyanatgruppen) und/oder Polyisocyanat (mit einer Vielzahl von Isocyanatgruppen) aufweisen oder daraus bestehen. Ferner kann die Reaktivkomponente ein aliphatisches Isocyanat und/oder aromatisches Isocyanat aufweisen oder daraus bestehen.

Gemäß verschiedenen Ausführungsformen kann der Reaktivklebstoff auf Isocyanat-Basis weitere Zusatzstoffe aufweisen, die die chemischen Eigenschaften oder die daraus resultierenden mechanischen Eigenschaften in gewünschter Weise ändern.

Gemäß verschiedenen Ausführungsformen kann die Reaktivkomponente weitere Zusatzstoffe aufweisen, die die chemischen Eigenschaften oder die daraus resultierenden mechanischen Eigenschaften in gewünschter Weise ändern.

Gemäß verschiedenen Ausführungsformen kann der Reaktivklebstoff eine Aktivierungstemperatur (oder chemische Reaktionstemperatur) in einem Bereich von ungefähr 50°C bis ungefähr 220°C aufweisen. Ferner kann der Reaktivklebstoff eine (beispielsweise aufgrund der Schmelzklebekomponente) eine Schmelztemperatur in einem Bereich von ungefähr 30°C bis ungefähr 200°C aufweisen.

Gemäß verschiedenen Ausführungsformen kann der Reaktivklebstoff auf Isocyanat-Basis eine Polymerkomponente aufweisen, wobei diese Polymerkomponente als ein Trägermedium und/oder als Reaktionsmedium für die beispielsweise gekapselte desaktivierte Reaktivkomponente bereitgestellt sein kann.

Gemäß verschiedenen Ausführungsformen kann die Polymerkomponente (oder der Reaktivklebstoff auf Isocyanat-Basis) ein Polymer und/oder ein Co-Polymer aufweisen oder daraus bestehen. Gemäß verschiedenen Ausführungsformen kann die Polymerkomponente ein thermoplastischer Schmelzklebstoff sein oder einen thermoplastischen Schmelzklebstoff aufweisen. Gemäß verschiedenen Ausführungsformen kann die Polymerkomponente ein reaktiver Schmelzklebstoff sein oder einen reaktiven Schmelzklebstoff aufweisen. Beispielsweise kann die Polymerkomponente oberhalb der Aktivierungstemperatur der Reaktivkomponente mit der Reaktivkomponente chemisch reagieren, beispielsweise vernetzen.

Gemäß verschiedenen Ausführungsformen kann die Polymerkomponente (oder der Reaktivklebstoff auf Isocyanat-Basis) mindestens eins der folgenden Materialien aufweisen oder aus mindestens einem der folgenden Materialien bestehen: ein Polyamid, ein Polyethylen, ein Polyolefin (z.B. Polyethylen, z.B. Polypropylen), ein Ethylenvinylacetat (Co-Polymer), ein Polyester, ein thermoplastisches Elastomer (TPE, z.B. ein lineares Elastomer), ein thermoplastisches Elastomer auf Olefinbasis (TPE-O), ein vernetztes thermoplastisches Elastomer auf Olefinbasis (TPE-V), ein thermoplastisches Elastomer auf Urethanbasis (TPE-U), ein thermoplastisches Polyesterelastomer oder ein thermoplastischer Copolyester (TPE-E), ein Styrol-Block-Co-Polymer (TPE-S) (Styrol-Butadien-Styrol (SBS), Styrol-Ethylen-Butylen-Styrol (SEBS), Styrol-Ethylen-Propylen-Styrol (SEPS), Styrol-Ethylen-Ethylen-Propylen-Styrol (SEEPS), und/oder Methacrylsäuremethylester-Butadien-Styrol (MBS)), ein thermoplastisches Co-Polyamid (TPE-A), ein Styrol-Methylmethacrylat-Polymer (SMMA) und/oder ein Vinylpyrrolidon/Vinylacetat-Copolymer.

Gemäß verschiedenen Ausführungsformen kann die Polymerkomponente einen beliebig gewählten Kunststoff aufweisen, wobei die Polymerkomponente mindestens ein Material aufweisen kann, welches mit der Reaktivkomponente chemisch reagieren kann. Dafür kann die Polymerkomponente ein Polyol aufweisen oder daraus bestehen, oder beispielsweise Polymere oder Co-Polymere auf Polyol-Basis aufweisen oder daraus bestehen.

Gemäß verschiedenen Ausführungsformen kann der latente Reaktivklebstoff oder der desaktivierte Reaktivklebstoff (beispielsweise oberflächendesaktivierte Isocyanatpartikel oder Polyisocyanatpartikel 104a in einer Heißklebekomponente 104b, wie in Fig.2 dargestellt ist) mittels Erwärmens chemisch aktiviert werden, so dass der desaktivierte Reaktivklebstoff dann aktiviert sein kann und mit Materialien in der Umgebung chemisch reagieren und/oder vernetzen kann. Gemäß verschiedenen Ausführungsformen kann der desaktivierte Reaktivklebstoff auf eine Temperatur oberhalb der entsprechenden Reaktionstemperatur des Isocyanats oder Polyisocyanats erwärmt werden, so dass der Reaktivklebstoff mit funktionellen Gruppen innerhalb des Reaktivklebstoffs und/oder mit der Polymerkomponente chemisch reagieren kann und/oder vernetzen kann.

Gemäß verschiedenen Ausführungsformen kann der Reaktivklebstoff auf Isocyanat-Basis auch mit einem Material des Chipkartengehäuses 102 und/oder des Chipmoduls 106 chemisch reagieren, da das Chipkartengehäuse 102 oder das Chipmodul 106 einen Kunststoff oder ein Polymer aufweisen kann.

Gemäß verschiedenen Ausführungsformen kann der Reaktivklebstoff auf Isocyanat-Basis eine Polyadditions-Reaktion ermöglichen, beispielsweise von Polyisocyanat mit Diolen oder Polyolen als funktionelle Gruppen. Gemäß verschiedenen Ausführungsformen kann der Reaktivklebstoff auf Isocyanat-Basis eine Polyadditions-Reaktion mit der Heißklebekomponente ermöglichen. Gemäß verschiedenen Ausführungsformen kann der Reaktivklebstoff auf Isocyanat-Basis eine Polyadditions-Reaktion mit der Heißklebekomponente ermöglichen, wobei die Polyadditions-Reaktion aufgrund des Erwärmens der latenten (desaktivierten oder oberflächendesaktivierten) gekapselten Reaktivkomponente innerhalb der Heißklebekomponente erfolgen kann.

Gemäß verschiedenen Ausführungsformen kann der Reaktivklebstoff auf Isocyanat-Basis eine Polyadditions-Reaktion mit einem Material des Chipkartengehäuses 102 und/oder des Chipmoduls 106 ermöglichen. Mit anderen Worten kann der Reaktivklebstoff auf Isocyanat-Basis das Chipkartengehäuse 102 und das Chipmodul 106 besonders effektiv verbinden, da das Material des Chipkartengehäuses 102 und/oder des Chipmoduls 106 geeignet sein kann (da der Chip und/oder das Chipmodul einen Kunststoff oder ein Polymer aufweisen kann), dass die Reaktivkomponente des Reaktivklebstoffs auf Isocyanat-Basis mit dem Material des Chipkartengehäuses 102 und/oder des Chipmoduls 106 chemisch reagieren kann.

Weitere funktionelle Gruppen, die beispielsweise mit dem Reaktivklebstoff auf Polyisocyanat-Basis oder mit der Reaktivkomponente reagieren können, können beispielsweise die Hydroxygruppe oder die Carboxygruppe sein.

Gemäß verschiedenen Ausführungsformen kann die Reaktivkomponente vernetzende Eigenschaften aufweisen (beispielsweise nachdem die Reaktivkomponente chemisch aktiviert wurde), und somit die resultierenden Eigenschaften der Polymerkomponente wesentlich beeinflussen. Somit kann das Verkleben des Chipkartengehäuses 102 mit dem Chipmodul 106 in einem zweistufigen Prozess erfolgen, wie später im Detail beschrieben wird.

Gemäß verschiedenen Ausführungsformen kann das Desaktivieren des Reaktivklebstoffs auf Isocyanat-Basis und/oder das Oberflächendesaktivieren der Partikel 104a der Reaktivkomponente 104a (wie in Fig.2 dargestellt ist) mittels Aminen oder Aminogruppen erfolgen. Beispielsweise können Polyharnstoffe mittels der Polyaddition von Isocyanaten (oder Polyisocyanaten) und Aminen gebildet werden, so dass die Isocyanatgruppen (oder Polyisocyanatgruppen) desaktiviert sein können.

Gemäß verschiedenen Ausführungsformen kann der Reaktivklebstoff in Form von desaktivierten Isocyanatpartikeln 104a oder Polyisocyanatpartikeln 104a innerhalb der Heißklebekomponente 104b bereitgestellt sein oder bereitgestellt werden. Ferner können die desaktivierten Isocyanatpartikel 104a oder Polyisocyanatpartikel 104a einen Durchmesser in einem Bereich von beispielsweise wenigen Mikrometern bis zu mehreren hundert Mikrometern aufweisen, z.B. eine Größe in einem Bereich vom ungefähr 5 *µ*m bis ungefähr 500 µm.

Ferner kann die Heißklebekomponente 104b (oder die Hotmeltkomponente 104b) eine Schmelztemperatur in einem Bereich von ungefähr 30°C bis ungefähr 200°C aufweisen.

Gemäß verschiedenen Ausführungsformen kann mittels eines Reaktivklebstoffs auf Isocyanat-Basis, der in eine Hotmeltkomponente (Schmelzklebstoffkomponente) eingebettet oder dispergiert sein kann, eine Chipkarte 100 bereitgestellt sein oder hergestellt werden, wobei die Gebrauchsfähigkeit einer Chipkarte 100 wesentlich verlängert werden kann, beispielsweise kann eine Gebrauchsfähigkeit von durchschnittlich 4 Jahren für herkömmliche Chipkarten bis auf eine durchschnittliche Gebrauchsfähigkeit von ungefähr 10 Jahre oder mehr als 10 Jahren verlängert sein. Gemäß verschiedenen Ausführungsformen kann die chemische Aktivierungstemperatur des Reaktivklebstoffes höher sein als die Schmelztemperatur des Reaktivklebstoffes, wodurch eine Verbesserung der Prozesssicherheit erreicht werden kann. Gemäß verschiedenen Ausführungsformen kann der Reaktivklebstoff eine Reaktivkomponente in Kapseln oder in gekapselter Form aufweisen, die in eine Schmelzklebstoffkomponente eingebracht sein können oder eingebracht werden können, wobei der Reaktivklebstoff beispielsweise latent reaktiv sein kann. Beispielsweise kann der Reaktivklebstoff desaktiviert sein.

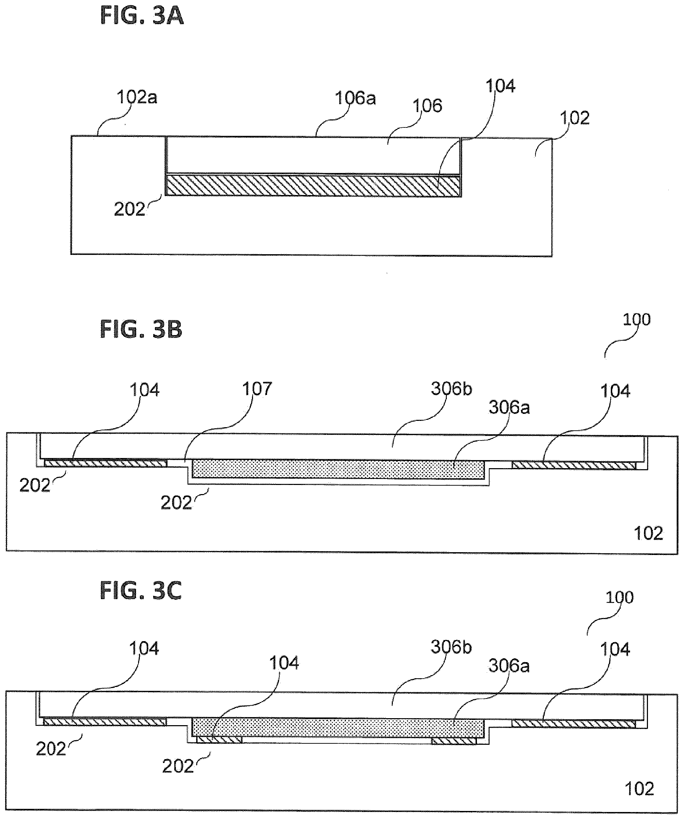

Wie in **Fig.3A** schematisch in einer Querschnittsansicht dargestellt ist, kann das Chipmodul 106 in eine Aussparung 202 des Chipkartengehäuses 102 eingelegt oder eingebracht sein. Wie in der Fig.3A dargestellt ist, kann dabei die Oberfläche 106a des Chipmoduls 106 mit der Oberfläche des Chipkartengehäuses 102a bündig abschließen. Ferner kann das Chipmodul 106 auch in der Aussparung 202 des Chipkartengehäuses 102 versenkt werden, oder zumindest teilweise aus der Aussparung 202 des Chipkartengehäuses 102 herausragen.

Ferner kann das Chipmodul 106, wie in **Fig.3B** und **Fig.3C** dargestellt ist, einen Chip 306a und einen Chipträger 306b aufweisen, wobei der Chip 306a auf dem Chipträger 306b befestigt sein kann. Gemäß verschiedenen Ausführungsformen kann der Chip 306a auf den Chipträger 306b mittels Klebens oder Lötens befestigt sein oder befestigt werden. Gemäß verschiedenen Ausführungsformen kann somit beispielsweise ein Lötmittel zwischen dem Chip 306a und dem Chipträger 306b angeordnet oder eingebracht sein. Ferner kann sich zwischen dem Chip 306a und dem Chipträger 306b eine Klebeschicht befinden, wobei die Klebeschicht (nicht dargestellt) einen Reaktivklebstoff auf Isocyanat-Basis aufweist. Somit kann der Reaktivklebstoff auf Isocyanat-Basis beispielsweise sowohl den Chip 306a auf dem Chipträger 306b befestigen, als auch das Chipmodul 106 auf dem Chipkartengehäuse 102 ankleben, wobei aufgrund der chemischen Reaktion, welche nach dem Aktivieren des Reaktivklebstoffs auf Isocyanat-Basis ablaufen kann, der gesamte Reaktivklebstoff zu einer Einheit vernetzen kann, wodurch die Manipulationssicherheit der Chipkarte 100, des Chips 306a und/oder des Chipmoduls 106 erhöht werden kann.

Gemäß verschiedenen Ausführungsformen kann der Chip 306a zwischen dem Chipträger 306b und dem Chipkartengehäuse 102 angeordnet sein. Mit anderen Worten kann das Chipmodul 106 derart in das Chipkartengehäuse 102 eingesetzt oder an dem Chipkartengehäuse 102 befestigt werden, dass der Chip 306a in Richtung des Chipkartengehäuses 102 zeigt. Ferner kann das Chipmodul 106 auch in umgedrehter Konfiguration an dem Chipkartengehäuse 102 befestigt sein oder befestigt werden, so dass der Chip 306a von dem Chipkartengehäuse 102 weg zeigt.

Beispielsweise kann, gemäß verschiedenen Ausführungsformen, ein zerstörungsfreies entfernen des Chipmoduls 106 von dem Chipkartengehäuse 102 nicht möglich sein, sobald der Reaktivklebstoff auf Isocyanat-Basis die jeweilige Klebeschicht vernetzt.

Wie in Fig.3B und Fig.3C dargestellt ist, kann das Chipmodul 106 (aufweisend den Chip 306a und den Chipträger 306b) in der Aussparung 202 des Chipkartengehäuses 102 befestigt sein. Gemäß verschiedenen Ausführungsformen kann dabei der Chip 306a mit dem Chipkartengehäuse 102 und/oder der Chipträger 306b mit dem Chipkartengehäuse 102 verbunden oder verklebt sein.

Gemäß verschiedenen Ausführungsformen kann die Aussparung 202 in dem Chipkartengehäuse 102 an die Form und die Funktionsweise des Chipmoduls 106 (des Chips 306a, des Chipträgers 306b) angepasst sein.

Gemäß verschiedenen Ausführungsformen kann der Chip 306a, wie bereits beschrieben, ein Speicherchip, ein Logikchip, ein RFID-Chip oder ein Mikroprozessor sein.

Gemäß verschiedenen Ausführungsformen kann zum Aktivieren des Reaktivklebstoffs auf Isocyanat-Basis das Chipkartengehäuse 102 und das Chipmodul 106 auf eine Temperatur oberhalb der chemischen Aktivierungstemperatur des Reaktivklebstoffs auf Isocyanat-Basis erwärmt werden.

Gemäß verschiedenen Ausführungsformen kann das Chipmodul 106 (der Chip 306a, der Chipträger 306b) teilweise von dem Reaktivklebstoff auf Isocyanat-Basis bedeckt sein, so dass sich beispielsweise ein Spalt 107 zwischen dem Chipmodul 106 und dem Chipkartengehäuse 102 befinden kann.

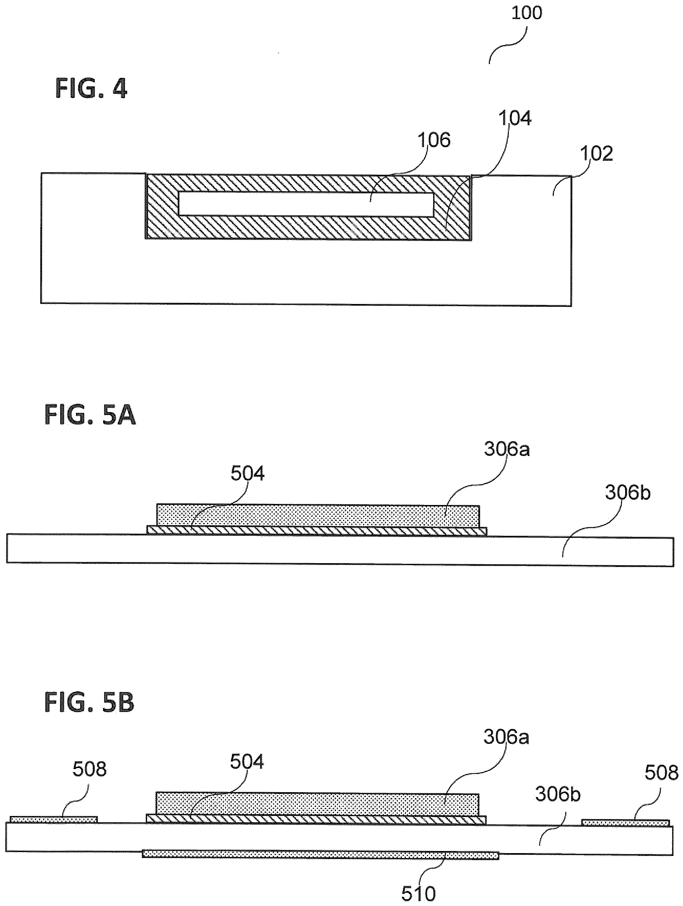

Ferner kann das Chipmodul 106 (sowie der Chip 306a, der Chipträger 306b) vollständig von dem Reaktivklebstoff auf Isocyanat-Basis umgeben sein, wie beispielsweise schematisch in einer Querschnittsansicht in **Fig.4** dargestellt ist.

Ferner kann das Chipmodul 106 (sowie der Chip 306a und/oder der Chipträger 306b) teilweise von dem Reaktivklebstoff auf Isocyanat-Basis umgeben sein.

Gemäß verschiedenen Ausführungsformen kann die Chipkarte 100 eine kontaktbehaftete Chipkarte 100 sein (die Chipkarte kann ein Kotaktpad aufweisen), oder die Chipkarte 100 kann eine Dual-Interface-Chipkarte sein, wobei die Chipkarte ein Chipmodul aufweisen kann, welches ein Kontaktpad und eine kontaktlose Schnittstelle aufweisen kann. Gemäß verschiedenen Ausführungsformen kann die Chipkarte ein Chipmodul 106 aufweisen, wobei das Chipmodul 106 ein kontaktloses Interface aufweisen kann, beispielsweise eine Antenne oder mehrere Antennen aufweisend.

Wie in **Fig.5A** schematisch in einer Querschnittsansicht dargestellt ist, kann der Chip 306a mittels einer Befestigungsstruktur 504 an dem Chipträger 306b befestigt sein. Ferner kann die Befestigungsstruktur 504 ein Lötmaterial oder einen Klebstoff (beispielsweise einen Reaktivklebstoff auf Isocyanat-Basis) aufweisen. Ferner kann die Befestigungsstruktur 504 eine elektrische Leitungsführung ermöglich, um beispielsweise den Chip 306a mit einer Kontaktstruktur oder einer Antenne elektrisch zu verbinden.

Wie in **Fig.5B** schematisch in einer Querschnittsansicht dargestellt ist, kann das Chipmodul 106, aufweisend den Chip 306a, den Chipträger 306b und die Befestigungsstruktur 504, ferner mindestens eins von Folgendem aufweisen: eine Antenne 508 (oder mehrere Antennen beispielsweise eine erste Antenne auf der Oberseite des Chipträgers 306b und eine zweite Antenne auf der Unterseite des Chipträgers 306b), und/oder eine Kontaktstruktur 510 (beispielsweise ein Iso-Chipkarten-Kontaktpad auf einer Seite des Chipträgers 306b gegenüber des Chips 306a).

Gemäß verschiedenen Ausführungsformen kann die Kontaktstruktur 510 elektrisch leitend mit dem Chip 306a verbunden sein. Ferner kann die Antenne 508 elektrisch leitend mit dem Chip 306a verbunden sein.

Gemäß verschiedenen Ausführungsformen kann der Chip 306a ein flexibler Chip sein. Ferner kann beispielsweise das Chipmodul 106 oder ein flexibles Chipmodul sein.

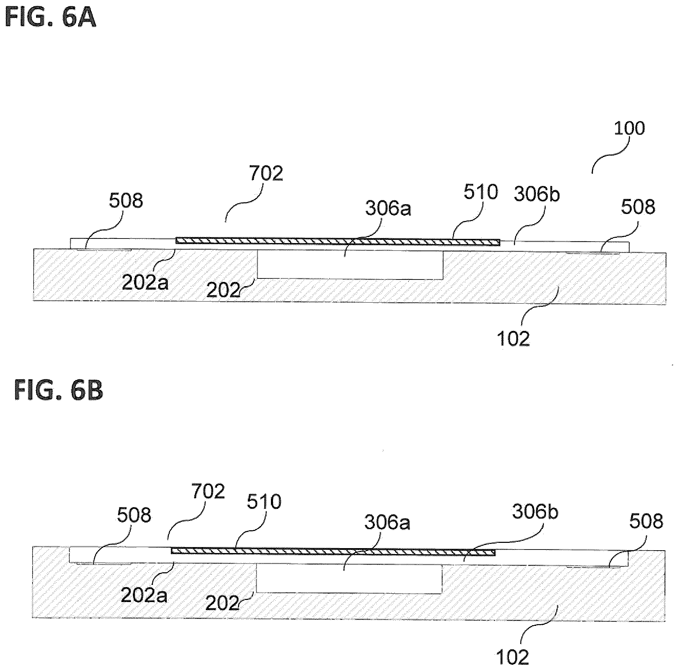

Gemäß verschiedenen Ausführungsformen kann das Chipmodul 106, beispielsweise aufweisend den Chip 306a, den Chipträger 306b und die Befestigungsstruktur 504, sowie die Antenne 508 und/oder die Kontaktstruktur 510, an einem Chipkartengehäuse 102 mittels des Reaktivklebstoffs auf Isocyanat-Basis befestigt werden, wie in **Fig.6A** und **Fig.6B** dargestellt ist. Dabei kann der Reaktivklebstoff zwischen dem Chipmodul 106, aufweisend den Chip 306a und den Chipträger 306b und die Antenne 508, und dem Chipkartengehäuse 102 in die Aussparung 202 des Chipkartengehäuses 102 eingebracht werden und/oder auf die Oberfläche 202a des Chipkartengehäuses 102 aufgebracht werden, beispielsweise kann der Reaktivklebstoff flüssig aufgetragen (dispenst) werden oder in Form einer Klebeschicht oder Klebefolie aufgebracht werden, wie zuvor beschrieben wurde.

Gemäß verschiedenen Ausführungsformen kann das Chipmodul 106 in das Chipkartengehäuse 102 eingeklebt sein, wobei auf der freilegenden Oberfläche des Chipmoduls 106 eine Deckschicht angeordnet sein kann.

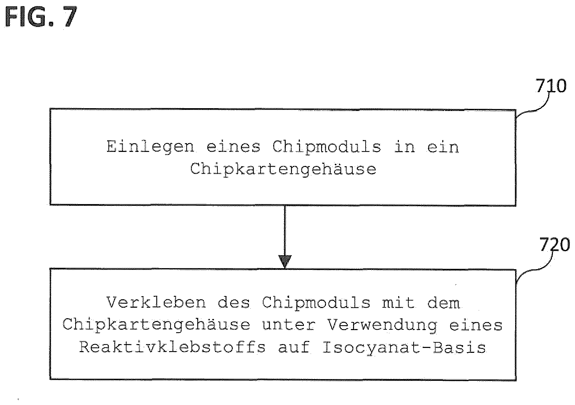

Gemäß verschiedenen Ausführungsformen kann ein Verfahren zum Herstellen einer Chipkarte 100 Folgendes aufweisen, wie beispielsweise in **Fig.7** in einem schematischen Ablaufdiagramm dargestellt ist: in 710, das Einlegen eines Chipmoduls 106 in ein Chipkartengehäuse 102; und, in 720, das Verkleben des Chipmoduls 106 mit dem Chipkartengehäuse 102 unter Verwendung eines Reaktivklebstoffs auf Isocyanat-Basis.

Gemäß verschiedenen Ausführungsformen kann bei dem Verkleben des Chipmoduls 106 mit dem Chipkartengehäuse 102 der Reaktivklebstoff erwärmt werden.

Gemäß verschiedenen Ausführungsformen kann das Verkleben des Chipmoduls 106 mit dem Chipkartengehäuse 102 unter einem mechanischen Druck erfolgen oder mittels einer mechanischen Kraft erfolgen.

Gemäß verschiedenen Ausführungsformen kann der Reaktivklebstoff auf Isocyanat-Basis, beispielsweise bestehend aus desaktivierten Polyisocyanatpartikel 104a innerhalb der Heißklebekomponente 104b, auf das Chipmodul 106 und/oder das Chipkartengehäuse 102 aufgebracht werden. Das Aufbringen des Reaktivklebstoffs kann bei einer Temperatur erfolgen, die unterhalb der Aktivierungstemperatur (Reaktionstemperatur) des desaktivierten Polyisocyanats liegen kann und beispielsweise oberhalb der Aktivierungstemperatur (Schmelztemperatur) der Heißklebekomponente. Gemäß verschiedenen Ausführungsformen kann das Aufbringen des Reaktivklebstoffs auf Isocyanat-Basis auf das Chipmodul 106 und/oder das Chipkartengehäuse 102 erfolgen, bevor das Chipmodul 106 in das Chipkartengehäuse 102 eingelegt wird. Ferner kann die Heißklebekomponente zumindest eines der zuvor beschriebenen Stoffe aufweisen oder sein.

Gemäß verschiedenen Ausführungsformen kann das Verkleben des Chipmoduls 106 mit dem Chipkartengehäuse 102 das Zusammenbringen (Fügen) der entsprechend zu verbindenden Flächen und/oder das Einlegen des Chipmoduls 106 in die Aussparung 202 des Chipkartengehäuses 102 aufweisen, wobei zumindest auf einer Oberfläche der zu verbindenden Flächen der Reaktivklebstoff aufgetragen werden kann, wobei das Verkleben beispielsweise zunächst bei einer Temperatur erfolgen kann, die unterhalb der Aktivierungstemperatur (Reaktionstemperatur) des desaktivierten Polyisocyanats 104a liegen kann und beispielsweise oberhalb der Aktivierungstemperatur (Schmelztemperatur) der Heißklebekomponente 104b.

Gemäß verschiedenen Ausführungsformen kann im Anschluss an das Verkleben eine Temperaturbehandlung erfolgen, wobei der Reaktivklebstoff bis auf eine Temperatur oberhalb der Aktivierungstemperatur (Reaktionstemperatur) des Reaktivklebstoffs erwärmt werden kann, so dass das Verkleben aufgrund der chemischen Reaktion des Reaktivklebstoffs oder der Reaktivkomponente 104a erfolgen kann. Wie bereits beschrieben, kann dabei der Reaktivklebstoff auf Isocyanat-Basis auch mit dem Material des Chipmoduls 106 oder des Chipkartengehäuses 102 vernetzen, so dass die Chipkarte 100 eine erhöhte Haltbarkeit und/oder eine erhöhte Manipulationssicherheit aufweisen kann. Ferner kann dieser Prozess, da das Verkleben mittels des Reaktivklebstoffs auf Isocyanat-Basis erfolgen kann, eine hohe Reproduzierbarkeit und eine hohe Prozesssicherheit aufweisen.

Gemäß verschiedenen Ausführungsformen kann das Verkleben des Chipmoduls 106 mit dem Chipkartengehäuse 102 das Zusammenbringen (Fügen) der entsprechend zu verbindenden Flächen und/oder das Einlegen des Chipmoduls 106 in die Aussparung 202 des Chipkartengehäuses 102 aufweisen, wobei zumindest auf einer Oberfläche der zu verbindenden Flächen der Reaktivklebstoff aufgetragen werden kann, wobei das Verbinden beispielsweise bei einer Temperatur erfolgen kann, so dass der Reaktivklebstoff aktiviert wird und das Verbinden aufgrund der chemischen Reaktion des Reaktivklebstoffs erfolgen kann.

Gemäß verschiedenen Ausführungsformen kann das Aufbringen des Reaktivklebstoffs mittels Dispensierens erfolgen. Dabei kann ferner der Reaktivklebstoff auf Isocyanat-Basis eine Polymerkomponente aufweisen, die wasserlöslich sein kann, so dass das Dispensieren auf Wasserbasis erfolgen kann. Gemäß verschiedenen Ausführungsformen kann der Reaktivklebstoff auch in Form einer Folie oder eines Pulvers aufgebracht werden. Gemäß verschiedenen Ausführungsformen kann das Aufbringen des Reaktivkomponente und der Heißklebekomponente mittels Dispensierens erfolgen. Gemäß verschiedenen Ausführungsformen können die Reaktivkomponente und die Heißklebekomponente auch in Form einer Folie oder eines Pulvers aufgebracht werden.

Der Reaktivklebstoff, die Reaktivkomponente und/oder die Heißklebekomponente das Chipmodul 106 und das zugehörige Chipkartengehäuse 102 können thermisch stabil und mit den gewünschten mechanischen Eigenschaften (beispielsweise Flexibilität und Haltbarkeit) verbinden (oder verkleben). Dabei können die entsprechend verwendeten Materialien angepasst werden, so dass verbesserte Eigenschaften wie Belastbarkeit, Verarbeitbarkeit, Verarbeitungstemperaturen, chemische Beständigkeit, Oberflächenbenetzung, und ähnliches erreicht werden können.

Der Reaktivklebstoff, die Reaktivkomponente und/oder die Heißklebekomponente können auch in einem sogenannten Underfill-Prozess (Unterfüllprozess) genutzt werden, wobei der Reaktivklebstoff auf Isocyanat-Basis in einen Hohlraum oder Spalt zwischen dem Chip 306a und einem Chipträger 306b eingebracht und/oder eingefüllt werden kann. Gemäß verschiedenen Ausführungsformen kann ein Undefill-Prozess auch zum Füllen eines Spalts und/oder Hohlraums zwischen einem Chipmodul 106 und einem Chipkartengehäuse 102 genutzt werden.

Gemäß verschiedenen Ausführungsformen kann das Chipmodul 106 auch in den Reaktivklebstoff auf Isocyanat-Basis eingebettet werden.

Ferner kann der Reaktivklebstoff in Partikelform 104a innerhalb der Heißklebekomponente 104b dispergiert sein, wobei diese Dispersion weitere Partikel aufweisen kann, beispielsweise elastisch nicht chemisch reagierende Partikel, welche die mechanischen Eigenschaften der Klebeschicht verbessern können (nicht dargestellt).

Gemäß verschiedenen Ausführungsformen kann der Reaktivklebstoff auf Isocyanat-Basis auch in einem wasserlöslichen Polymer dispergiert sein, oder in ein wasserlösliches Polymer eingebracht werden, beispielsweise in Partikelform, so dass der Reaktivklebstoff und das Polymer in eine Aussparung in dem Chipkartengehäuse in Flüssigform eingebracht werden können. Im Anschluss kann das Wasser aus der Schicht ausgetrieben werden, beispielsweise mittels einer Wärmebehandlung, und das Reaktivklebstoff auf Isocyanat-Basis kann beispielsweise eine Klebeschicht 104 und/oder desaktivierte Klebeschicht 104 bilden, welche die gleiche Funktionsweise und die gleichen Merkmale aufweisen kann, wie vorangehend beschrieben wurde.

Gemäß verschiedenen Ausführungsformen, wie bezüglich Fig.2 beschrieben, kann ein gekapselter latenter Reaktivklebstoff 104a in eine Heißklebekomponente 104b (oder Schmelzkleberkomponente, oder Hotmeltkomponente) eingebracht werden, wobei die Aktivierungstemperatur des gekapselten latenten Reaktivklebstoffs 104a oberhalb der Aktivierungstemperatur (oder beispielsweise der Schmelztemperatur) der Heißklebekomponente 104b (des Schmelzklebers) liegen kann. Damit kann beispielsweise eine Verbesserung der Prozesssicherheit erzielt werden. Mittels des Reaktivklebstoffs kann gleichzeitig die Gebrauchsfähigkeit der mit einem Kontaktmodul oder Dual-Interface-Modul ausgestatteten Chipkarte 100 wesentlich erhöht werden. Dies kann mit einer Verbesserung der Manipulationssicherheit einhergehen.

Es sei angemerkt, dass die Reaktivkomponente nach dem Aktivieren des Reaktivklebstoffs auf Isocyanat-Basis vernetzt, so dass die Reaktivkomponente nach einer entsprechenden Wärmebehandlung oder nach dem Aktivieren nicht mehr in gekapselter Form vorliegen kann.

Gemäß verschiedenen Ausführungsformen kann das Chipmodul 106 ein elektronisches Chipmodul 106 sein.

Gemäß verschiedenen Ausführungsformen kann der für das Verbessern der Hafteigenschaften sowie der Prozesssicherheit eingesetzte latente gekapselte Reaktivklebstoff auf Isocyanat-Basis mittels der Heißklebekomponente direkt auf das Chipmodul 106 aufgebracht werden, beispielsweise als ein Klebstofffilm oder eine Klebstoffschicht, oder in flüssigform in die Kavität 202 der Chipkarte 100 eingebracht werden, z.B. dispenst werden.

Gemäß verschiedenen Ausführungsformen kann somit die Topfzeit des Reaktivklebstoffs keinen begrenzenden Einfluss auf den Fertigungsprozess haben. Bindungsprozesse während der Produktion und die damit einhergehende Verschlechterung der Klebstoffeigenschaften kann mittels der Kapselung der Reaktivkomponente verhindert werden. Damit kann eine höhere Prozesssicherheit gewährleistet sein.

Gemäß verschiedenen Ausführungsformen kann mittels eines Reaktivklebstoffs auf Isocyanat-Basis, wie er hierin beschrieben wurde, die Gebrauchsfähigkeit einer Chipkarte 100 wesentlich verlängert werden.

Gemäß verschiedenen Ausführungsformen kann in analoger Weise ein Klebstoff auf Cyanacrylat-Basis anstelle des Reaktivklebstoffs auf Isocyanat-Basis verwendet werden. Ferner kann die Chipkarte 100 eine Klebeschicht 104 zum Verkleben des Chipmoduls 106 mit dem Chipkartengehäuse 102 aufweisen, wobei die Klebeschicht 104 einen Klebstoff auf Cyanacrylat-Basis oder Reaktivklebstoff auf Cyanacrylat-Basis aufweist.

Gemäß verschiedenen Ausführungsformen kann ein Klebstoff auf Cyanacrylat-Basis beispielsweise mindestens eine Klebstoff aus der folgenden Gruppe von Klebstoffen aufweisen: 2-Cyanoacrylsäuremethylester, n-Butylcyanacrylat und 2-Octyl-Cyanacrylat.

Gemäß verschiedenen Ausführungsformen kann der Klebstoff auf Cyanacrylat-Basis mittels Wasser, Wasserdampf oder Luftfeuchtigkeit ausgehärtet werden. Ferner kann der Klebstoff auf Cyanacrylat-Basis bereits bei Raumtemperatur vollständig aushärten, was ein vereinfachtes Prozessieren ermöglichen kann.

## Patentansprüche

1. Chipkarte (100) aufweisend:
• ein elektronisches Chipmodul (106);
• ein Chipkartengehäuse (102); und
• eine das Chipmodul (106) teilweise oder vollständig umgebende Klebeschicht (104) zum Verkleben des Chipmoduls (106) mit dem Chipkartengehäuse (102), wobei die Klebeschicht (104) einen Reaktivklebstoff auf Isocyanat - Basis aufweist, wobei der Reaktivklebstoff ferner eine Heißklebekomponente aufweist, **gekennzeichnet dadurch, dass** seine Aktivierungstemperatur oberhalb der Schmelztemperatur der Heißklebekomponente liegt.

2. Chipkarte gemäß Anspruch 1,
wobei das Chipmodul (106) mindestens einen Chip (306a) aufweist.

3. Chipkarte gemäß Anspruch 1 oder 2,
wobei das Chipmodul (106) mindestens eine Antenne (508) zum Übertragen von Daten aufweist.

4. Chipkarte gemäß einem der Ansprüche 1 bis 3,
wobei das Chipmodul (106) mindestens eine Kontaktstruktur (510) zum kontaktbasierten Übertragen von Daten aufweist.

5. Chipkarte gemäß einem der Ansprüche 1 bis 4,
wobei der Reaktivklebstoff ein gekapselter latenter Reaktivklebstoff ist.

6. Verfahren zum Herstellen einer Chipkarte (100), wobei das Verfahren aufweist:
• Einlegen eines Chipmoduls (106) in ein Chipkartengehäuse (102); und
• Verkleben des Chipmoduls (106) mit dem Chipkartengehäuse (102) unter Verwendung eines Reaktivklebstoffs auf Isocyanat-Basis oder auf Cyanacrylat-Basis, sodass der Reaktivklebstoff das Chipmodul (106) teilweise oder vollständig umgibt, wobei der Reaktivklebstoff ferner eine Heißklebekomponente aufweist und derart eingerichtet ist, dass seine Aktivierungstemperatur oberhalb der Schmelztemperatur der Heißklebekomponente liegt.

7. Verfahren gemäß Anspruch 6,
wobei zum Verkleben des Chipmoduls (106) mit dem Chipkartengehäuse (102) der Reaktivklebstoff erwärmt wird.

8. Verwenden eines Reaktivklebstoffs auf Isocyanat-Basis, wobei der Reaktivklebstoff ferner eine Heißklebekomponente aufweist, zum Verkleben eines Chipmoduls (106) mit einem Chipkartengehäuse (102), sodass der Reaktivklebstoff das Chipmodul (106) teilweise oder vollständig umgibt, und wobei der Reaktivklebstoff derart eingerichtet ist, dass seine Aktivierungstemperatur oberhalb der Schmelztemperatur der Heißklebekomponente liegt.

9. Chipkarte (100) aufweisend:
• ein elektronisches Chipmodul (106);
• ein Chipkartengehäuse (102); und
• eine das Chipmodul (106) teilweise oder vollständig umgebende Klebeschicht (104) zum Verkleben des Chipmoduls (106) mit dem Chipkartengehäuse (102), wobei die Klebeschicht (104) einen Klebstoff aus Cyanacrylat-Basis aufweist, wobei der Klebstoff ferner eine Heißklebekomponente aufweist,
**gekennzeichnet dadurch, dass** seine Aktivierungstemperatur oberhalb der Schmelztemperatur der Heißklebekomponente liegt.

10. Verwenden eines Reaktivklebstoffs auf Cyanacrylat-Basis, wobei der Reaktivklebstoff ferner eine Heißklebekomponente aufweist, zum Verkleben eines Chipmoduls (106) mit einem Chipkartengehäuse (102), sodass der Reaktivklebstoff das Chipmodul (106) teilweise oder vollständig umgibt, und wobei der Reaktivklebstoff derart eingerichtet ist, dass seine Aktivierungstemperatur oberhalb der Schmelztemperatur der Heißklebekomponente liegt.

## Claims

1. Chip card (100) comprising:
- an electronic chip module (106);
- a chip card housing (102); and
- an adhesive layer (104), partially or fully surrounding the chip module (106), for bonding the chip module (106) with the chip card housing (102), wherein the adhesive layer (104) can comprise a isocyanate-based reactive adhesive, wherein the reactive adhesive further comprises a hot adhesive component, **characterised in that** its activation temperature lies above the melting temperature of the hot adhesive component.

2. Chip card according to claim 1,
wherein the chip module (106) comprises at least one chip (306a).

3. Chip card according to claim 1 or 2,
wherein the chip module (106) comprises at least one antenna (508) for transferring data.

4. Chip card according to any one of claims 1 to 3,
wherein the chip module (106) comprises a contact structure (510) for the contact-based transfer of data.

5. Chip card according to any one of claims 1 to 4,
wherein the reactive adhesive is a capsulated latent reactive adhesive.

6. Method for producing a chip card (100) wherein the method comprises:
- insertion of a chip module (106) into a chip card housing (102); and
- adhesive bonding of the chip module (106) to the chip card housing (102), making use of an isocyanate-based or cyanacrylate-based reactive adhesive, such that the reactive adhesive partially or fully surrounds the chip module (106), wherein the reactive adhesive further comprises a hot adhesive component, and is configured in such a way that its activation temperature lies above the melting temperature of the hot adhesive component.

7. Method according to claim 6,
wherein, for adhesively bonding the chip module (106) to the chip card housing (102), the reactive adhesive is heated.

8. Use of an isocyanate-based reactive adhesive, wherein the reactive adhesive further comprises a hot adhesive component, for adhesively bonding a chip module (106) with a chip card housing (102), such that the reactive adhesive partially or completely surrounds the chip module (106), and wherein the reactive adhesive is configured in such a way that its activation temperature lies above the melting temperature of the hot adhesive component.

9. Chip card (100) comprising:
- an electronic chip module (106);
- a chip card housing (102); and
- an adhesive layer (104), partially or fully surrounding the chip module (106), for bonding the chip module (106) with the chip card housing (102), wherein the adhesive layer (104) comprises a cyanacrylate-based adhesive, wherein the reactive adhesive further comprises a hot adhesive component, **characterised in that** its activation temperature lies above the melting temperature of the hot adhesive component.

10. Use of a cyanacrylate-based reactive adhesive, wherein the reactive adhesive further comprises a hot adhesive component, for bonding a chip module (106) with a chip card housing (102), such that the reactive adhesive partially or wholly surrounds the chip module (106), and wherein the reactive adhesive is configured in such a way its activation temperature lies above the melting temperature of the hot adhesive component.

## Revendications

1. Carte à puce (100) présentant :
- un module de puce (106) électronique ;
- un boîtier de carte à puce (102) ; et
- une couche de colle (104) entourant en partie ou en totalité le module de puce (106), servant à coller le module de puce (106) au boîtier de carte à puce (102), dans laquelle la couche de colle (104) présente une colle réactive à base d'isocyanate, dans laquelle la colle réactive présente en outre un composant adhésif thermofusible, **caractérisée en ce**
**que** sa température d'activation est supérieure à la température de fusion du composant adhésif thermofusible.

2. Carte à puce selon la revendication 1,
dans laquelle le module de puce (106) présente au moins une puce (306a).

3. Carte à puce selon la revendication 1 ou 2,
dans laquelle le module de puce (106) présente au moins une antenne (508) servant à transférer des données.

4. Carte à puce selon l'une quelconque des revendications 1 à 3,
dans laquelle le module de puce (106) présente au moins une structure de contact (510) servant à transférer des données sur la base du contact.

5. Carte à puce selon l'une quelconque des revendications 1 à 4,
dans laquelle la colle réactive est une colle réactive latente encapsulée.

6. Procédé servant à fabriquer une carte à puce (100), dans lequel le procédé présente :
- le placement d'un module de puce (106) dans un boîtier de carte à puce (102) ; et
- le collage du module de puce (106) au boîtier de carte à puce (102) en utilisant une colle réactive à base d'isocyanate ou à base de cyanoacrylate de sorte que la colle réactive entoure en partie ou en totalité le module de puce (106), dans lequel la colle réactive présente en outre un composant adhésif thermofusible et est mise au point de telle manière que sa température d'activation est supérieure à la température de fusion du composant adhésif thermofusible.

7. Procédé selon la revendication 6,
dans lequel la colle réactive est réchauffée pour coller le module de puce (106) au boîtier de carte à puce (102).

8. Utilisation d'une colle réactive à base d'isocyanate, dans laquelle la colle réactive présente en outre un composant adhésif thermofusible, servant à coller un module de puce (106) au boîtier de carte à puce (102) de sorte que la colle réactive entoure en partie ou en totalité le module de puce (106), et dans laquelle la colle réactive est mise au point de telle manière que sa température d'activation est supérieure à la température de fusion du composant adhésif thermofusible.

9. Carte à puce (100) présentant :
- un module de puce (106) électronique ;
- un boîtier de carte à puce (102) ; et
- une couche de colle (104) entourant en partie ou en totalité le module de puce (106), servant à coller le module de puce (106) au boîtier de carte à puce (102), dans laquelle la couche de colle (104) présente une colle à base de cyanoacrylate, dans laquelle la colle présente en outre un composant adhésif thermofusible, **caractérisée en ce**
**que** sa température d'activation est supérieure à la température de fusion du composant adhésif thermofusible.

10. Utilisation d'une colle réactive à base de cyanoacrylate, dans laquelle la colle réactive présente en outre un composant adhésif thermofusible, servant à coller un module de puce (106) à un boîtier de carte à puce (102) de sorte que la colle réactive entoure en partie ou en totalité le module de puce (106), et dans laquelle la colle réactive est mise au point de telle manière que sa température d'activation est supérieure à la température de fusion du composant adhésif thermofusible.
